# EUROPEAN PATENT APPLICATION

(11) **EP 4 580 232 A1**
(43) Date of publication of application: **02.07.2025**
(21) Application number: 23856557.6
(22) Date of filing: 21.08.2023
(51) Int. Cl.: H04W 12/069, H04L 9/32

(54) **SYSTEM INFORMATION TRANSMISSION METHOD AND APPARATUS, AND TERMINAL, NETWORK-SIDE DEVICE AND MEDIUM**

(30) Priority: 26.08.2022 CN 202211035490
(71) Applicant: Vivo Mobile Communication Co., Ltd., Dongguan, Guangdong 523863 (CN)
(72) Inventor: BAO, Wei, Dongguan, Guangdong 523863 (CN); ZHENG, Qian, Dongguan, Guangdong 523863 (CN)
(74) Representative: Cabinet Beaumont
(86) International application number: PCT/CN2023/113942
(87) International publication number: WO 2024/041467

(57) **Abstract**

This application discloses a system information transmission method and apparatus, a terminal, a network side device, and a medium, and pertains to the field of communication technologies. A system information transmission method in embodiments of this application includes: The terminal receives first system information; obtains signature information corresponding to the first system information; and performs signature verification on the first system information based on the signature information corresponding to the first system information, where content of the first system information used for signature includes all or a part of content of the first system information. Another system information transmission method in the embodiments of this application includes the following steps: A network side device determines content of first system information used for signature, where the content of the first system information used for signature includes all or a part of content of the first system information, and the first system information includes one or more system information blocks; generates signature information corresponding to the first system information based on the content of the first system information used for signature; and broadcasts the first system information and the signature information corresponding to the first system information.

## Description

### CROSS-REFERENCE TO RELATED APPLICATIONS

This application claims priority to Chinese Patent Application No. 202211035490.X, filed with the China National Intellectual Property Administration on August 26, 2022 and entitled "SYSTEM INFORMATION TRANSMISSION METHOD AND APPARATUS, TERMINAL, NETWORK SIDE DEVICE, AND MEDIUM", which is incorporated herein by reference in its entirety.

### TECHNICAL FIELD

This application pertains to the field of communication technologies, and in particular, to a system information transmission method and apparatus, a terminal, a network side device, and a medium.

### BACKGROUND

In a communication system, system information serves as a link between a terminal and a network side device. The network side device may send the system information in a broadcast manner for the terminal to obtain non-access stratum (Non-Access Stratum, NAS) and access stratum (Access Stratum, AS) information in both a radio resource control (Radio Resource Control, RRC) idle state and a radio resource control connected state.

Currently, when broadcasting the system information, the network side device merely performs transmission of the system information, resulting in low security. If an illegal base station sends system information to indicate a terminal camped on the base station to perform specific operations, such as indicating the terminal to perform cell reselection based on a specified frequency priority, the terminal may operate based on the instruction of the illegal base station. This may lead to failure of related policies configured by operators and may even induce the terminal to connect to the illegal base station, causing unpredictable losses for users.

### SUMMARY

Embodiments of this application provide a system information transmission method and apparatus, a terminal, a network side device, and a medium, which can solve a problem of low security of system information.

According to a first aspect, a system information transmission method is provided, including the following steps.

A terminal receives first system information, where the first system information includes one or more system information blocks.

The terminal obtains signature information corresponding to the first system information.

The terminal performs signature verification on the first system information based on the signature information corresponding to the first system information, where
content of the first system information used for signature includes all or a part of content of the first system information.

According to a second aspect, a system information transmission apparatus is provided, including:
a receiving module, configured to receive first system information, where the first system information includes one or more system information blocks;
an obtaining module, configured to obtain signature information corresponding to the first system information; and
a verification module, configured to perform signature verification on the first system information based on the signature information corresponding to the first system information, where
content of the first system information used for signature includes all or a part of content of the first system information.

According to a third aspect, a system information transmission method is provided, including the following steps.

A network side device determines content of first system information used for signature, where the content of the first system information used for signature includes all or a part of content of the first system information, and the first system information includes one or more system information blocks.

The network side device generates signature information corresponding to the first system information based on the content of the first system information used for signature.

The network side device broadcasts the first system information and the signature information corresponding to the first system information.

According to a fourth aspect, a system information transmission apparatus is provided, including:
a second determining module, configured to determine content of first system information used for signature, where the content of the first system information used for signature includes all or a part of content of the first system information, and the first system information includes one or more system information blocks;
a generation module, configured to generate signature information corresponding to the first system information based on the content of the first system information used for signature; and
a broadcasting module, configured to broadcast the first system information and the signature information corresponding to the first system information.

According to a fifth aspect, a terminal is provided, including a processor and a memory, the memory stores a program or an instruction that can be run on the processor, and when the program or the instruction is executed by the processor, the steps of the system information transmission method according to the first aspect are implemented.

According to a sixth aspect, a network side device is provided, including a processor and a memory, the memory stores a program or an instruction that can be run on the processor, and when the program or the instruction is executed by the processor, the steps of the system information transmission method according to the third aspect are implemented.

According to a seventh aspect, a communication system is provided, including a terminal and a network side device, where the terminal may be configured to perform the steps of the system information transmission method according to the first aspect, and the network side device may be configured to perform the steps of the system information transmission method according to the third aspect.

According to an eighth aspect, a readable storage medium is provided, where the readable storage medium stores a program or an instruction, and when the program or the instruction is executed by a processor, the steps of the system information transmission method according to the first aspect are implemented, or the steps of the system information transmission method according to the third aspect are implemented.

According to a ninth aspect, a computer program product/program product is provided, where the computer program product/program product is stored in a storage medium, and the computer program/program product is executed by at least one processor to implement the steps of the system information transmission method according to the first aspect, or the steps of the system information transmission method according to the third aspect.

In the embodiments of this application, system information corresponds to signature information. Content of the system information used for signature includes all or a part of content of the system information. After receiving the system information, a terminal may verify the system information based on the signature information corresponding to the system information. This can improve security of the system information, effectively avoid operating based on system information sent by an illegal base station, and avoid causing losses to users.

### BRIEF DESCRIPTION OF DRAWINGS

FIG. 1 is a block diagram of a wireless communication system to which embodiments of this application may be applied;
FIG. 2 is a schematic diagram of system information change in a related art;
FIG. 3 is an implementation flowchart of a system information transmission method according to an embodiment of this application;
FIG. 4 is a schematic diagram of a structure of a system information transmission apparatus corresponding to FIG. 3 according to an embodiment of this application;
FIG. 5 is an implementation flowchart of another system information transmission method according to an embodiment of this application;
FIG. 6 is a schematic diagram of a structure of a system information transmission apparatus corresponding to FIG. 5 according to an embodiment of this application;
FIG. 7 is a schematic diagram of a structure of a communication device according to an embodiment of this application;
FIG. 8 is a schematic diagram of a hardware structure of a terminal according to an embodiment of this application; and
FIG. 9 is a schematic diagram of a hardware structure of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, in this specification and the claims, "and/or" represents at least one of connected objects, and a character "/" generally represents an "or" relationship between associated objects.

It should be noted that technologies described in the embodiments of this application are not limited to a Long Term Evolution (Long Term Evolution, LTE)/LTE-Advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application may be used interchangeably. The technologies described can be applied to both the systems and the radio technologies mentioned above as well as to other systems and radio technologies. A new radio (New Radio, NR) system is described in the following description for illustrative purposes, and the NR terminology is used in most of the following description, although these technologies can also be applied to applications other than the NR system application, such as the 6^{th} generation (6^{th} Generation, 6G) communication system.

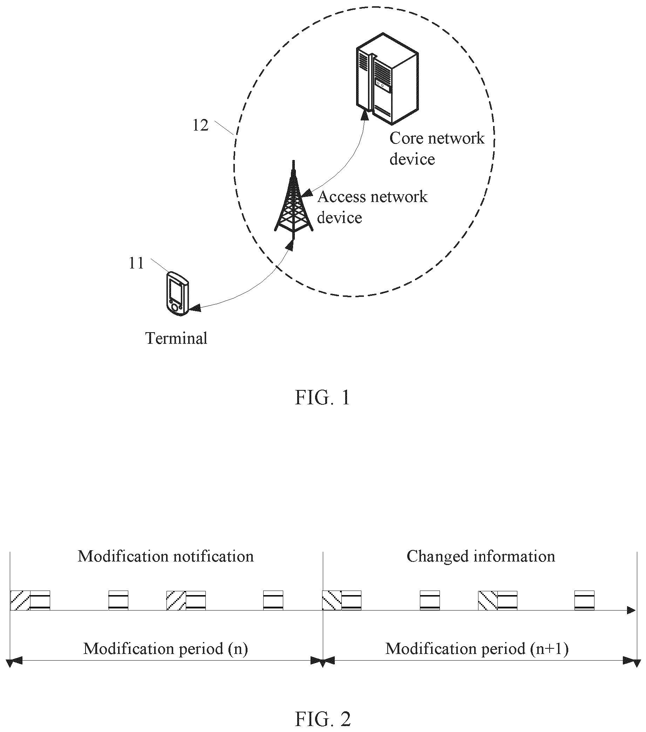

FIG. 1 is a block diagram of a wireless communication system to which embodiments of this application may be applied. The wireless communication system includes a terminal 11 and a network side device 12.

The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a home device with a wireless communication function, such as a refrigerator, a television, a washing machine, or a furniture), a game console, a personal computer (personal computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, and a smart chain), a smart wrist strap, a smart dress, and the like. It should be noted that a specific type of the terminal 11 is not limited in the embodiments of this application.

The network side device 12 may include an access network device or a core network device.

The access network device may also be referred to as a radio access network device, a radio access network (Radio Access Network, RAN), a radio access network function, or a radio access network unit. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. As long as a same technical effect is achieved, the base station is not limited to a specified technical term. It should be noted that, in the embodiments of this application, only a base station in an NR system is used as an example, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application service discovery function (Edge Application Server Discovery Function, EASDF), unified data management (Unified Data Management, UDM), unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in the embodiments of this application, only a core network device in an NR system is used as an example for description, and a specific type of the core network device is not limited.

For ease of understanding, application scenarios and related technologies and concepts in the embodiments of this application are first described.

The embodiments of this application may be applied to a system information transmission scenario. When a network side device needs to broadcast system information, the network side device may generate, based on a key used for signature, that is, a signature key, signature information corresponding to the system information, and send the system information and the signature information corresponding to the system information in a broadcast manner. After receiving the system information and the corresponding signature information, a terminal may verify the system information based on the signature information corresponding to the system information. This can improve security of the system information, effectively avoid operating based on system information sent by an illegal base station, and avoid causing losses to users.

If an illegal network side device does not have the key used for signature, the illegal network side device cannot generate the signature information corresponding to the system information that can be verified by signature. When failing to obtain the signature information corresponding to the system information, the terminal may consider that the system information is invalid. Alternatively, if an illegal network side device tampers with the system information and then sends the tampered system information, the terminal can determine, through signature verification, that the system information is tampered with.

System information of a communication network may be classified into many system information blocks (System Information Blocks, SIBs) based on purpose and content. For example, there may be the following SIBs:
SIB 1: Being used to indicate whether a terminal is allowed to access a cell and is used for scheduling another system information block;
SIB 2: Common information used by a terminal in an idle state or an inactive state to perform intra-frequency/inter-frequency/inter-system cell reselection;
SIB 3: Dedicated information used by a terminal in an idle state or an inactive state to perform intra-frequency cell reselection;
SIB 4: Dedicated information used by a terminal in an idle state or an inactive state to perform inter-frequency cell reselection;
SIB 5: Dedicated information used by a terminal in an idle state or an inactive state to perform inter-system cell reselection; and ...

Except for SIB 1, other SIBs have the following characteristics:
Each SIB has a specific sending period, such as 80 ms, 160 ms, 320 ms, or the like. The sending period of each SIB is configurable and is notified to a terminal by a base station.

A plurality of SIBs with a same sending period may form a system information message (SI message) for sending.

The system information message is sent in a predetermined transmit window, and the system information message is in a one-to-one correspondence with the transmit window. To be specific, one system information message corresponds to one transmit window, and only one system information message is sent in one transmit window.

Within a sending period, each system information message has one transmit window.

A time length of the transmit window of the system information message is configurable, but time lengths of transmit windows of all system information messages within a cell are the same.

Transmit windows of different system information messages are connected in a head-to-tail manner.

Within a transmit window, the base station may select one or more slots for sending the system information message.

System information messages sent within a transmit window may undergo hybrid auto repeat request (Hybrid Auto Repeat Request, HARQ) combining, that is, content of the system information messages cannot be changed within the transmit window.

A mapping relationship between the other SIBs and system information messages is configured by SIB 1. A time position of the transmit window of each system information message is further indicated in SIB 1. The terminal needs to obtain SIB 1 before obtaining the other SIBs.

The system information supports two change manners.

Manner 1: The system information remains unchanged within a sending period, and is changeable in different sending periods.

A part of content of the system information is changeable between sending periods. For example, a sending period of SIB X is 320 ms. SIB X broadcast in any two consecutive sending periods allows a part of content to be different. However, within a sending period, content of SIB X broadcast for a plurality of times cannot be changed.

Manner 2: Content broadcast for a plurality of times within a system information modification period remains the same, and content broadcast in different system information modification periods may be different. A length of the system information modification period is greater than or equal to a length of a longest sending period corresponding to all system information blocks in a cell.

A part of content of the system information is changeable at a start position of the system information modification period. As shown in FIG. 2, a square filled with left diagonal lines and a square filled with horizontal lines represent two different SIBs or SI messages respectively. A length of a sending period of the former is twice as long as a length of the latter. A network sends a modification notification in a first system information modification period (modification period (n)). At the beginning of the second system information modification period (modification period (n+1)), content of SIBs or SI messages corresponding to the square filled with left diagonal lines have changed, represented by squares filled with right diagonal lines. In other words, after receiving the modification notification, the terminal needs to re-receive the system information at a start moment of a next system information modification period, to obtain updated system information in a timely manner.

The foregoing change manners both are a change manner of system information broadcast by a same cell.

Content of a SIB is organized based on a field or an information element (Information Element, IE), and one SIB may include one or more fields or information elements. A change manner allowed for each field or information element is specified in a protocol.

The foregoing describes the application scenarios and the related technologies and concepts in the embodiments of this application. With reference to the accompanying drawings, the following describes in detail, by using some embodiments and application scenarios thereof, a system information transmission method provided in the embodiments of this application.

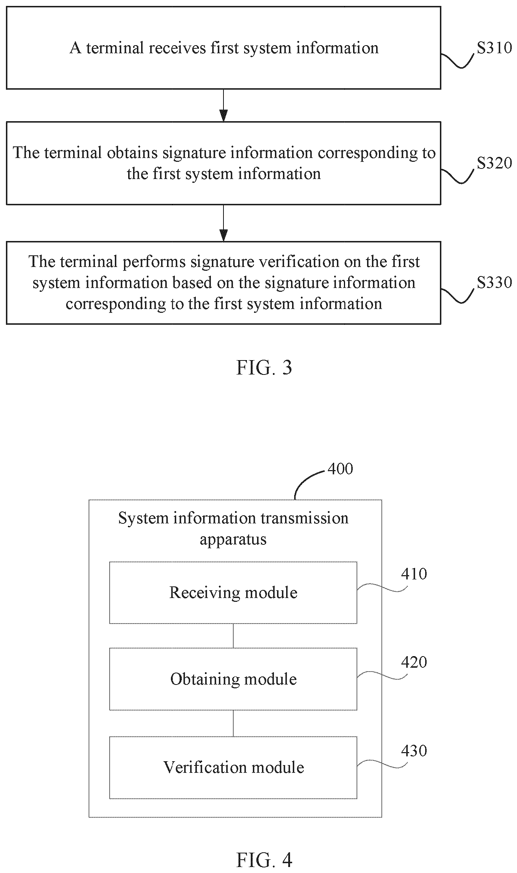

FIG. 3 is an implementation flowchart of a system information transmission method according to an embodiment of this application. The method may include the following steps:

S310: A terminal receives first system information.

The first system information includes one or more system information blocks.

In this embodiment of this application, the first system information may be a system information message, that is, an SI message, and includes one or more SIBs except for SIB 1; or the first system information may be a master information block (Master Information Block, MIB) or SIB 1. The MIB carries necessary basic information. The first system information includes one or more system information blocks. In this embodiment of this application, the MIB and the SIB are uniformly described as a system information block, and the MIB and different SIBs are considered as different system information blocks.

A network side device sends system information in a broadcast manner. The first system information is any system information including one or more system information blocks broadcast by the network side device.

The network side device may first determine content of the first system information used for signature, where the content of the first system information used for signature includes all or a part of content of the first system information. Granularity of the content used for signature may be a field or an information element. In other words, all the content of the first system information may be signed, or a part of the content of the first system information may be signed. All the content of the first system information is all information or all information bits of the first system information, and a part of the content of the first system information is a part of information or a part of information bits of the first system information.

Then, the network side device may generate signature information corresponding to the first system information based on the content of the first system information used for signature. In other words, an input parameter used for calculating the signature information corresponding to the first system information includes all or a part of the content of the first system information.

Specifically, the network side device may sign, based on second target information, to generate the signature information corresponding to the first system information, where the second target information may include the content of the first system information used for signature and a signature key. The signature key is a key used for signature. For example, the network side device may perform a specific operation by using the signature key and the content of the first system information used for signature, and an operation result obtained is the signature information corresponding to the first system information. The specific operation may include one or more signature operations in a related technology. This is not limited in the embodiments of this application.

The second target information may further include information related to a sending time of the first system information. The network side device may perform a specific operation by using the signature key, the content of the first system information used for signature, and the information related to the sending time of the first system information, and an operation result obtained is the signature information corresponding to the first system information. Adding the information related to the sending time of the first system information as an input of an operation may increase difficulty of tampering with the first system information and improve security.

After generating the signature information corresponding to the first system information, the network side device may broadcast the first system information and the signature information corresponding to the first system information. The network side device may simultaneously broadcast the first system information and the signature information corresponding to the first system information; or may first broadcast the first system information, and then broadcast the signature information corresponding to the first system information at an appropriate time, or vice versa. For example, the content of the first system information used for signature includes a part of the content of the first system information. When the part of the content changes, signature information corresponding to changed first system information is generated, and the network side device sends the signature information corresponding to the changed first system information in a broadcast manner. When the part of content does not change, the signature information corresponding to the first system information remains unchanged. The network side device may simultaneously broadcast the signature information corresponding to the first system information each time when broadcasting the first system information, or broadcast the signature information corresponding to the first system information after the first system information is broadcast for set first duration, or broadcast the first system information after the signature information corresponding to the first system information is broadcast for set second duration.

The terminal may receive the system information according to a specific situation. For example, when the terminal selects or reselects a cell, or completes handover, or enters a wireless communication network from another system, or returns to the coverage area from outside the coverage area, the terminal needs to receive the system information.

After receiving the first system information, the terminal may perform an operation of a subsequent verification step to perform signature verification on the first system information.

S320: The terminal obtains the signature information corresponding to the first system information.

As described above, the network side device may broadcast the first system information and the signature information corresponding to the first system information. After receiving the first system information, the terminal may obtain the signature information corresponding to the first system information if it is determined that signature verification is to be performed on the first system information. The content of the first system information used for signature includes all or a part of the content of the first system information.

It should be noted that there is no preset sequential execution relationship between step S310 and step S320, that is, step S310 may occur before or after step S320. One possibility is that, when the terminal enters a new cell, the signature information corresponding to the first system information is carried in a system information transmit window that arrives earlier, and the first system information is carried in a system information transmit window that arrives later. In this case, the terminal may first receive the signature information, and then receive the first system information, and vice versa. Certainly, it is not excluded that the first system information and the corresponding signature information are carried in a same system information transmit window, that is, may be simultaneously received by the terminal.

S330: The terminal performs signature verification on the first system information based on the signature information corresponding to the first system information.

After receiving the first system information and obtaining the signature information corresponding to the first system information, the terminal may perform signature verification on the first system information based on the signature information corresponding to the first system information, so as to verify legitimacy of the first system information. The verification performed on the first system information may determine whether the network side device broadcasting the first system information is a legitimate device.

Specifically, the terminal may perform signature verification on the first system information based on first target information, where the first target information includes at least the first system information, the signature information corresponding to the first system information, and a signature verification key. The signature verification key is a key used to verify a signature. A signature key and a signature verification key may be a pair of public and private keys, with the signature key being the private key, and the signature verification key being the public key. The network side device generates, by using the signature key, signature information corresponding to the system information, and the terminal validates the system information by using the signature verification key. The signature verification key may be a key obtained during terminal registration.

The first target information may further include information related to a receiving time of the first system information. It may be considered that the information related to the receiving time of the first system information is consistent with information related to a sending time of the first system information.

According to the method provided in this embodiment of this application, system information corresponds to signature information. Content of the system information used for signature includes all or a part of content of the system information. After receiving the system information, a terminal may verify the system information based on the signature information corresponding to the system information. This can improve security of the system information, effectively avoid operating based on system information sent by an illegal base station, and avoid causing losses to users.

In an embodiment of this application, that the terminal performs signature verification on the first system information based on the signature information corresponding to the first system information may include the following steps:
Step 1: The terminal determines the content of the first system information used for signature.
Step 2: The terminal performs signature verification on the first system information based on the signature information corresponding to the first system information and the content of the first system information used for signature.

For ease of description, the foregoing two steps are combined.

In this embodiment of this application, the content of the first system information used for signature may include all or a part of the content of the first system information. After receiving the first system information and obtaining the signature information corresponding to the first system information, the terminal may first determine the content of the first system information used for signature. The content used for signature may be understood as content used for generating the signature and/or content used for verifying the signature.

After determining the content of the first system information used for signature, the terminal may perform signature verification on the first system information based on the signature information corresponding to the first system information and the content of the first system information used for signature.

For example, a possible signature verification process is as follows:
The terminal obtains, based on the content of the first system information used for signature, an output 1 through calculation.

The terminal obtains, based on the signature information corresponding to the first system information and the signature verification key, an output 2 through calculation.

The terminal compares the output 1 with the output 2. If the output 1 is consistent with the output 2, it is considered that the signature verification performed on the first system information succeeds. If the output 1 is inconsistent with the output 2, it is considered that the signature verification performed on the first system information fails.

If an illegal network side device tampers with the first system information and obtains the signature verification key, illegal network side device may obtain, based on the first system information before tamping, the output 1 through calculation, that is, the output 2. However, correct signature information cannot be obtained from the signature verification key and the output 2. Therefore, the illegal network side device cannot broadcast the signature information that can be verified, and the first system information tampered with by the illegal network side device cannot pass the signature verification of the terminal.

Certainly, the foregoing is only a specific example, and another signature verification manner may be used. This is not limited in the embodiments of this application.

If the signature verification performed on the first system information fails, the first system information may be information broadcast by the illegal network side device, and the terminal may ignore the first system information to avoid operating in accordance with instructions of the first system information and causing losses to users.

The terminal first determines the content of the first system information used for signature, and then performs signature verification on the first system information based on the signature information corresponding to the first system information and the content of the first system information used for signature, so as to ensure accuracy of signature verification.

In an embodiment of this application, that the terminal determines the content of the first system information used for signature includes:
The terminal determines, based on first information, the content of the first system information used for signature.

In this embodiment of this application, the first information may be specified in a protocol or preconfigured in the terminal, for example, prewritten into the terminal according to a protocol rule. The first information may include content of each system information block not used or used for signature, that is, the content of each system information block not used or used for signature is displayed in the first information. Alternatively, the first information may include a feature of content not used or used for signature. Based on the feature of the content not used or used for signature that is included in the first information, content with a corresponding feature of each system information block may be determined as the content not used or used for signature.

The terminal may determine, based on first information, the content of the first system information used for signature. For example, the first information includes the content of each system information block not used for signature or the feature of the content not used for signature. The terminal may first determine, based on the first information, content of one or more system information blocks included in the first system information not used for signature, and other content of the first system information is the content used for signature. For another example, the first information includes the content of each system information block used for signature or the feature of the content used for signature. The terminal may determine, based on the first information, content of one or more system information blocks included in the first system information used for signature.

Accordingly, when determining the content of the first system information used for signature, the network side device may determine, based on third information, the content of the first system information used for signature. The third information may be the same as the first information. The third information may include content of each system information block not used or used for signature, or the third information may include a feature of content not used or used for signature. The third information may be specified in a protocol or preconfigured in the network side device. It is necessary to ensure that the understanding of the network side devices is consistent with that of the terminal.

In a specific implementation, the content of the first system information not used for signature may include content that is allowed to be changed within a system information modification period; and the content of the first system information used for signature may include other content except for the content of the first system information not used for signature.

The terminal may accurately determine, based on the first information, the content of the first system information used for signature, to help subsequently perform signature verification on the first system information based on the signature information corresponding to the first system information and the content of the first system information used for signature.

In an embodiment of this application, that the terminal determines the content of the first system information used for signature may include the following steps:
The terminal determines the content of the first system information used for signature based on indication information.

The indication information is used to indicate content of the first system information not used or used for signature.

In this embodiment of this application, the network side device may send the indication information. Specifically, the network side device may carry the indication information in the first system information or in another system information except for the first system information.

After receiving the first system information and obtaining the signature information corresponding to the first system information, the terminal may further obtain the indication information, and determine, based on the indication information, the content of the first system information used for signature. The indication information is included in the first system information or is included in another system information message except for the first system information. The terminal may obtain the indication information by receiving a corresponding system information message.

The terminal may accurately determine, based on the indication information, the content of the first system information used for signature, to help subsequently perform signature verification on the first system information based on the signature information corresponding to the first system information and the content of the first system information used for signature.

In addition, that the terminal determines the content of the first system information used for signature based on indication information further has the following advantages:
When a protocol version of the network side device is higher than a protocol version of the terminal, for example, the terminal supports an R18 protocol version, and the network side device supports an R19 protocol version, it is specified in the R19 protocol version that a domain or IE newly introduced in the R19 protocol version in an SI message X may not be used for signature. However, the terminal does not recognize the domain or the IE nor does the terminal know a length of the domain or the IE. Therefore, specific domains or IE not used for signature that are introduced after the R18 protocol version in the SI message X cannot be determined. In this case, the terminal may accurately determine, based on the indication information, the content of the first system information not used or used for signature.

The network side device is allowed to set the content not used for signature specified in some preset rules as the content used for signature. For example, when a network side device determines that it does not change related content very often, it can set the related content to the content used for signature, which provides better security.

In an embodiment of this application, the indication information may include one or more indication units, and each indication unit is used to indicate a part of the content of the first system information not used or used for signature.

For example, the indication information includes three indication units: an indication unit A, an indication unit B, and an indication unit C, respectively. The indication unit A is used to indicate that content of bit 0 to bit 3 of the first system information is content not used for signature, the indication unit B is used to indicate that content of bit 6 and bit 7 of the first system information is content not used for signature, and the indication unit C is used to indicate that content of bit 9 to bit 11 of the first system information is content not used for signature.

Certainly, if the indication information includes one indication unit, the indication unit indicates all the content of the first system information not used or used for signature.

Based on the part of the content of the first system information not used or used for signature that is indicated by each indication unit, the content of the first system information used for signature may be accurately determined.

Each indication unit includes a first parameter and a second parameter. A first parameter included in a target indication unit is used to indicate a start position of the content of the first system information not used or used for signature that is indicated by the target indication unit, and a second parameter included in the target indication unit is used to indicate a length of content corresponding to the first parameter; and the target indication unit is any one of the one or more indication units.

For example, the target indication unit is the indication unit B in the foregoing example. The content of the first system information not used for signature that is indicated by the target indication unit is the content of bit 6 and bit 7. The first parameter included in the target indication unit may represent a start position of the content, that is, a bit 6 position of the first system information, and the second parameter included in the target indication unit may represent a length of the content, that is, 1 bit. In other words, starting from a bit position represented by the first parameter, content of a bit whose length is represented by the second parameter is not used for signature.

Based on the first parameter and the second parameter included in each indication unit, the content of the first system information not used or used for signature that is indicated by each indication unit can be quickly obtained.

In an embodiment of this application, the indication information may further include a third parameter, and the third parameter is used to indicate a quantity of indication units included in the indication information, so as to avoid missing an indication unit.

In an embodiment of this application, the method may further include the following steps:
Step 1: The terminal determines whether the indication information complies with a rule corresponding to second information.
Step 2: The terminal determines, in a case that a first condition is met, that a verification performed on the first system information succeeds, where
   the first condition includes:
   the indication information complies with the rule corresponding to the second information; and
   the signature verification performed on the first system information succeeds based on the signature information corresponding to the first system information and the content of the first system information used for signature.
Step 3: The terminal determines, in a case that at least one of the following conditions is met, that the verification performed on the first system information fails, where
   the indication information does not comply with the rule corresponding to the second information; and
   the signature verification performed on the first system information fails based on the signature information corresponding to the first system information and the content of the first system information used for signature.

For ease of description, the foregoing three steps are combined.

In this embodiment of this application, after obtaining the indication information, the terminal may determine whether the indication information complies with the rule corresponding to the second information. The second information may be specified in a protocol or preconfigured in the terminal. The second information may include content of each system information block not used or used for signature, that is, the content of the first system information not used or used for signature is displayed in the second information. Alternatively, the second information may include a feature of content not used or used for signature. Based on the feature of the content not used or used for signature that is included in the second information, content with a corresponding feature of each system information block may be determined as the content not used or used for signature. The second information may be the same as the first information and the third information.

After determining whether the indication information complies with the rule corresponding to the second information, the terminal may determine, in a case that the first condition is met, that a verification performed on the first system information succeeds. The first condition includes that the indication information complies with the rule corresponding to the second information, and that the signature verification performed on the first system information succeeds based on the signature information corresponding to the first system information and the content of the first system information used for signature. In other words, in a case that the foregoing first condition is simultaneously met, it is considered that the verification performed on the first system information succeeds, and the first system information is legitimate.

After determining whether the indication information complies with the rule corresponding to the second information, the terminal may determine, in a case that a second condition is met, that the verification performed on the first system information fails. The second condition includes that the indication information does not comply with the rule corresponding to the second information, and that the signature verification performed on the first system information fails based on the signature information corresponding to the first system information and the content of the first system information used for signature. In other words, in a case that at least one condition included in the second condition is met, it is considered that the verification performed on the first system information fails, and the first system information is illegal and may be broadcast by an illegal network side device.

Specifically, the terminal may first determine whether the indication information complies with the rule corresponding to the second information. If it is determined that the indication information does not comply with the rule corresponding to the second information, it is considered that the verification performed on the first system information fails, and no signature verification is performed. After it is determined that the indication information complies with the rule corresponding to the second information, and the content of the first system information used for signature is determined based on the indication information, signature verification is performed on the first system information based on the signature information corresponding to the first system information and the content of the first system information used for signature. If the signature verification succeeds, it is considered that the verification performed on the first system information succeeds. If the signature verification fails, it may be considered that the verification performed on the first system information fails.

It should be noted that no limitation is imposed on an execution order of determining whether the indication information complies with the rule corresponding to the second information and determining, based on the indication information, the content of the first system information used for signature.

After determining, based on the indication information, the content of the first system information used for signature, the terminal may further perform signature verification on the first system information based on the signature information corresponding to the first system information and the content of the first system information used for signature. If the signature verification succeeds, it is further determined whether the indication information complies with the rule corresponding to the second information. If the indication information complies with the rule corresponding to the second information, it is considered that the verification performed on the first system information succeeds. If the indication information does not comply with the rule corresponding to the second information, it is considered that the verification performed on the first system information fails, and the first system information is illegal and may be broadcast by an illegal network side device. If the signature verification fails, it may be no longer determined whether the indication information complies with the rule corresponding to the second information, and it may be considered that the verification of the first system information fails.

In other words, no limitation is imposed on an execution order of determining whether the indication information complies with the rule corresponding to the second information and performing the signature verification on the first system information based on the signature information corresponding to the first system information and the content of the first system information used for signature. It can be determined that the verification performed on the first system information fails as long as a condition that the indication information does not comply with the rule corresponding to the second information or the signature verification performed on the first system information fails based on the signature information corresponding to the first system information and the content of the first system information used for signature is met. It can be determined that the verification performed on the first system information succeeds as long as a condition that the indication information complies with the rule corresponding to the second information and the signature verification performed on the first system information succeeds based on the signature information corresponding to the first system information and the content of the first system information used for signature is met.

With reference to a determining result of whether the indication information complies with the rule corresponding to the second information and a signature verification result, it may be more accurately determined whether the verification performed on the first system information succeeds.

In an embodiment of this application, that the terminal determines whether the indication information complies with the rule corresponding to the second information may include the following steps:

The terminal determines, in a case that at least one piece of the following information is determined, that the indication information does not comply with the rule corresponding to the second information:
the content used for signature indicated by the indication information does not include at least one of the content of the first system information used for signature that is determined based on the second information; or
the content not used for signature indicated by the indication information includes at least one of the content of the first system information used for signature that is determined based on the second information.

In this embodiment of this application, that the network side device determines the content of the first system information used for signature may be specifically: determining, based on third information, the content of the first system information used for signature. The determined content of the first system information used for signature includes content of the first system information used for signature that is determined based on the third information; the content not used for signature other than the determined content of the first system information used for signature does not include the content of the first system information used for signature that is determined based on the third information; and the determined content of the first system information used for signature includes the content of the first system information not used for signature that is determined based on the third information. In other words, the content of the first system information used for signature that is determined based on the third information must be included in content of the first system information used for signature that is finally determined by the network side device. However, the content of the first system information not used for signature that is determined based on the third information may be included in the content of the first system information used for signature that is finally determined by the network side device, so that this part of content is not easily tampered with.

It may be understood that an illegal network side device may tamper with the first system information by indicating to the terminal that some content of the first system information is not used for signature. Therefore, content used for signature determined based on the second information is not allowed to be set as content not used for signature. The content not used for signature indicated by the indication information should be within a permission range determined based on the second information. In other words, if the content not used for signature indicated by the indication information includes at least one of the content of the first system information used for signature that is determined based on the second information, it may be considered that the indication information violates the rule corresponding to the second information and the indication information does not comply with the rule corresponding to the second information. In this way, in a case that the illegal network side device sets some key content that needs to be protected as content not used for signature, the key content can be effectively detected.

Similarly, if the content of the first system information used for signature is determined based on the second information, but the content used for signature indicated by the indication information does not include the content of the first system information used for signature that is determined based on the second information, it may be considered that the indication information violates the rule corresponding to the second information, and the indication information does not comply with the rule corresponding to the second information.

Based on the foregoing information, it may be accurately determined whether the indication information complies with the rule corresponding to the second information. This can effectively avoid an extreme case in which the illegal network side device indicates to the terminal that all the content of the first system information is content not used for signature, thereby avoiding the signature mechanism causing losses to users.

In an embodiment of this application, the signature information corresponding to the first system information is included in a second system information message.

As described above, the first system information may be a system information message, for example, a first system information message, or the first system information may be an MIB or a SIB 1. The signature information corresponding to the first system information is included in the second system information message, and the second system information message is different from the first system information. The terminal can obtain the signature information corresponding to the first system information by receiving the second system information message.

Signature information corresponding to a plurality of pieces of system information may be included in a same system information message.

In an embodiment of this application, the content of the first system information used for signature is content whose value does not change within a system information modification period.

In this embodiment of this application, the content of the first system information used for signature includes all or a part of the content of the first system information. In other words, the network side device generates signature information corresponding to the first system information based on all or a part of the content of the first system information. The content used for signature may be the content whose value does not change within the system information modification period.

The system information modification period corresponds to a plurality of MIBs, SIB1, and a plurality of system information messages within a cell, and may correspond to a modification period for system information (system information, SI) change, or correspond to a broadcast control channel (Broadcast Control Channel, BCCH) modification period.

The content whose value does not change within the system information modification period means that the content is not allowed to have more than one value within the system information modification period. The content of the first system information used for signature is the content whose value does not change within the system information modification period. In this way, the signature information corresponding to the first system information may remain unchanged within the entire system information modification period. The second system information message carrying the signature information corresponding to the first system information may be sent in a sending frequency less than that of the first system information. For example, the first system information is SI message X with a sending period of 160 ms, the second system information message carrying the signature information corresponding to the first system information is SI message Y with a sending period of 640 ms. Because the content of the first system information used for signature and the signature information corresponding to the first system information do not change within one system information modification period, SI message X and SI message Y that are sent within the system information modification period are matched.

In other words, the signature information corresponding to the first system information remains unchanged within the system information modification period, and is changeable between system information modification periods. In other words, a change of the signature information corresponding to the first system information is limited.

In an embodiment of this application, within the system information modification period N, an input parameter used for calculating the signature information corresponding to the first system information may include time information associated with the system information modification period N and all or a part of the content of the first system information broadcast by a cell within the system information modification period N, where N is a positive integer.

The system information modification period N may be any system information modification period. The network side device may use the time information associated with the system information modification period N and all or a part of the content of the first system information broadcast by the cell within the system information modification period N as the input parameter, and generate the signature information corresponding to the first system information by using a signature key.

The time information associated with the system information modification period N may include at least one of the following:
a start moment of the system information modification period N;
an end moment of the system information modification period N;
a midpoint moment of the system information modification period N; or
a predefined moment between a start moment and an end moment of the system information modification period N.

The use of the time information associated with the system information modification period N as the input parameter can improve security of the first system information and increase the difficulty of tampering.

In an embodiment of this application, the content not used for signature may include content whose change is not limited to a system information modification period. For example, the content labeled "not result in system information change notification" in the protocol. In other words, content of each system information block not used for signature includes the content whose change is not limited to the system information modification period. Content of the first system information not used for signature also includes the content whose change is not limited to the system information modification period.

The content whose change is not limited to the system information modification period may include at least one of the following:
a system information resource request;
a service time; or
a reference time.

The change of the foregoing content is not limited to the system information modification period. P times of sending within one system information modification period may be broadcast to Q different values, where P>=Q. If the first system information includes the foregoing content, the foregoing content may be determined as the content of the first system information not used for signature.

For ease of understanding, this embodiment of this application is described by using a simple example.

The network side device may calculate, by using one or more of the following input parameters, signature information corresponding to the SI message 1: content of the SI message 1 used for signature, a signature key, and information related to a sending time of the SI message 1.

The network side device broadcasts the SI message 1 and signature information corresponding to the SI message 1 obtained through calculation, where the signature information is placed in an SI message 2 that is different from the SI message 1.

The terminal receives the SI message 1 and the SI message 2, and verifies the received SI message 1 by using one or more pieces of the following information: the content of the SI message 1 used for signature, information related to a receiving time of the SI message 1, the signature information corresponding to the SI message 1 carried in the SI message 2, and a signature verification key.

It should be noted that, in this embodiment of this application, if the content of the first system information used for signature is all the content of the first system information, all the content of the first system information may be protected, thereby improving security of the first system information.

Different content included in the first system information is changeable at different frequencies. Therefore, if the content of the first system information used for signature is a part of the content of the first system information, for example, the content used for signature is a part of content allowed to be changed at a slow frequency, the signature information corresponding to the first system information can be prevented from being changed at a highest value of the allowed frequency of change of the content included in the first system information. In addition, this facilitates the terminal to match the first system information and the signature information corresponding to the first system information, ensures that the signature information corresponding to the first system information has a long effective time, facilitates the terminal to perform signature verification, and reduces complexity of the terminal in verifying the signature.

In other words, the fact that the content of the first system information used for signature is a part of the content of the first system information has the following advantages:

If the content of the first system information not used for signature changes, the signature information corresponding to the first system information does not need to change accordingly, so that a change frequency is reduced, and an effective time of the signature information of the first system information becomes longer, thereby facilitating the terminal to perform signature verification.

A length of a sending period of the second system information message carrying the signature information corresponding to the first system information may be greater than a length of a sending period of the first system information, so that the second system information message carrying the signature information does not need to be frequently sent, thereby reducing signaling overheads.

If the signature information corresponding to the plurality of pieces of system information is carried in a same system information message, a sending period of the system information message used for carrying the signature information may be greater than a minimum value of a length of the sending period of the plurality of pieces of system information, so that the second system information message carrying the signature information does not need to be frequently sent, thereby reducing signaling overheads.

It should be noted that, in some implementations of this embodiment of this application, the foregoing first system information, the second system information message, and the like may alternatively be a positioning system broadcast message (Positioning System Information Block, posSIB).

The system information transmission method provided in FIG. 3 of this embodiment of this application may be performed by a system information transmission apparatus. In this embodiment of this application, the system information transmission apparatus provided in this embodiment of this application is described by using an example in which the system information transmission apparatus executes the system information transmission method shown in FIG. 3.

As shown in FIG. 4, the system information transmission apparatus 400 may include the following modules:
a receiving module 410, configured to receive first system information, where the first system information includes one or more system information blocks;
an obtaining module 420, configured to obtain signature information corresponding to the first system information; and
a verification module 430, configured to perform signature verification on the first system information based on the signature information corresponding to the first system information, where
content of the first system information used for signature includes all or a part of content of the first system information.

According to the apparatus provided in this embodiment of this application, system information corresponds to signature information. Content of the system information used for signature includes all or a part of content of the system information. After the system information is received, the system information may be verified based on the signature information corresponding to the system information. This can improve security of the system information, effectively avoid operating based on system information sent by an illegal base station, and avoid causing losses to users.

In a specific implementation of this application, the verification module 430 is configured to:
determine the content of the first system information used for signature; and
perform signature verification on the first system information based on the signature information corresponding to the first system information and the content of the first system information used for signature.

In a specific implementation of this application, the verification module 430 is configured to:
determine, based on first information, the content of the first system information used for signature.

In a specific implementation of this application, the first information includes content of each system information block not used or used for signature, or the first information includes a feature of content not used or used for signature.

In a specific implementation of this application, the first information is specified in a protocol or preconfigured in the terminal.

In a specific implementation of this application, the verification module 430 is configured to:
determine, based on indication information, the content of the first system information used for signature.

The indication information is used to indicate content of the first system information not used or used for signature.

In a specific implementation of this application, the indication information is included in the first system information or is included in another system information message except for the first system information.

In a specific implementation of this application, the indication information includes one or more indication units, and each indication unit is used to indicate a part of the content of the first system information not used or used for signature.

In a specific implementation of this application, each indication unit includes a first parameter and a second parameter, where
a first parameter included in a target indication unit is used to indicate a start position of the content of the first system information not used or used for signature that is indicated by the target indication unit, and a second parameter included in the target indication unit is used to indicate a length of content corresponding to the first parameter; and
the target indication unit is any one of the one or more indication units.

In a specific implementation of this application, the indication information further includes a third parameter, and the third parameter is used to indicate a quantity of indication units included in the indication information.

In a specific implementation of this application, the system information transmission apparatus 400 further includes:
a first determining module, configured to determine whether the indication information complies with a rule corresponding to second information.

The verification module 430 is further configured to determine, in a case that a first condition is met, that the verification performed on the first system information succeeds, where
the first condition includes:
the indication information complies with the rule corresponding to the second information; and
the signature verification performed on the first system information succeeds based on the signature information corresponding to the first system information and the content of the first system information used for signature.

In a specific implementation of this application, the verification module 430 is further configured to:
determine, in a case that a second condition is met, that the verification performed on the first system information fails, where
the second condition includes at least one of the following:
   the indication information does not comply with the rule corresponding to the second information; or
   the signature verification performed on the first system information fails based on the signature information corresponding to the first system information and the content of the first system information used for signature.

In a specific implementation of this application, the first determining module is configured to:
determine, in a case that at least one piece of the following information is determined, that the indication information does not comply with the rule corresponding to the second information:
the content used for signature indicated by the indication information does not include at least one of the content of the first system information used for signature that is determined based on the second information; or
the content not used for signature indicated by the indication information includes at least one of the content of the first system information used for signature that is determined based on the second information.

In a specific implementation of this application, the signature information corresponding to the first system information is included in a second system information message.

In a specific implementation of this application, the verification module 430 is configured to:
perform the signature verification on the first system information based on first target information, where
the first target information includes at least the first system information, the signature information corresponding to the first system information, and a signature verification key.

In a specific implementation of this application, the first target information further includes information related to a receiving time of the first system information.

In a specific implementation of this application, the content of the first system information used for signature is content whose value does not change within a system information modification period.

In a specific implementation of this application, the signature information corresponding to the first system information remains unchanged within the system information modification period, and is changeable between system information modification periods.

In a specific implementation of this application, within the system information modification period N, an input parameter used for calculating the signature information corresponding to the first system information includes time information associated with the system information modification period N and all or a part of the content of the first system information broadcast by a cell within the system information modification period N, where N is a positive integer.

In a specific implementation of this application, the time information associated with the system information modification period N includes at least one of the following:
a start moment of the system information modification period N;
an end moment of the system information modification period N;
a midpoint moment of the system information modification period N; or
a predefined moment between a start moment and an end moment of the system information modification period N.

In a specific implementation of this application, the content not used for signature may include content whose change is not limited to a system information modification period.

The system information transmission apparatus 400 in this embodiment of this application may be an electronic device, for example, an electronic device with an operating system, or may be a component in the electronic device, for example, an integrated circuit or a chip. The electronic device may be a terminal, or another device other than the terminal. For example, the terminal may include but is not limited to the foregoing listed types of the terminal 11, and the another device may be a server, a network attached storage (Network Attached Storage, NAS), or the like. This is not specifically limited in this embodiment of this application.

The system information transmission apparatus 400 provided in this embodiment of this application can implement the processes implemented in the method embodiment shown in FIG. 3, and achieve a same technical effect. To avoid repetition, details are not described herein again.

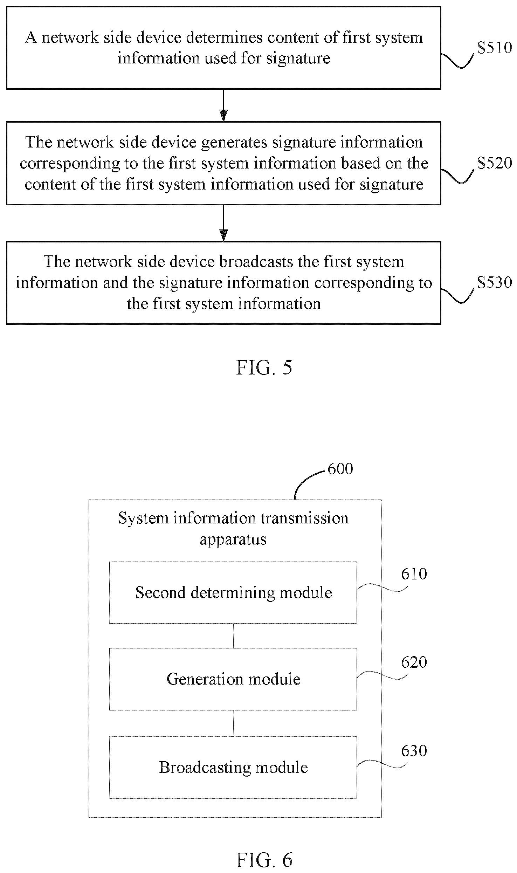

Accordingly, an embodiment of this application further provides a system information transmission method. As shown in FIG. 5, the method includes the following steps:
S510: A network side device determines content of the first system information used for signature, where the content of the first system information used for signature includes all or a part of content of the first system information, and the first system information includes one or more system information blocks.
S520: The network side device generates signature information corresponding to the first system information based on the content of the first system information used for signature.
S530: The network side device broadcasts the first system information and the signature information corresponding to the first system information.

According to the method provided in this embodiment of this application, system information corresponds to signature information. Content used for signature includes all or a part of content of the system information. The network side device broadcasts the system information and the signature information corresponding to the system information, so that after receiving the system information, a terminal may verify the system information based on the signature information corresponding to the system information. This can improve security of the system information, effectively avoid operating based on system information sent by an illegal base station, and avoid causing losses to users.

In a specific implementation of this application, that the network side device determines the content of the first system information used for signature includes:

The network side device determines, based on third information, the content of the first system information used for signature.

In a specific implementation of this application, the third information includes content of each system information block not used or used for signature, or the third information includes a feature of content not used or used for signature.

In a specific implementation of this application, the third information is specified in a protocol or preconfigured in the network side device.

In a specific implementation of this application, the method further includes:
The network side device carries indication information in the first system information or in another system information message except for the first system information.

In a specific implementation of this application, the indication information includes one or more indication units, and each indication unit is used to indicate the content of the first system information not used or used for signature.

In a specific implementation of this application, each indication unit includes a first parameter and a second parameter, where
a first parameter included in a target indication unit is used to indicate a start position of the content of the first system information not used or used for signature that is indicated by the target indication unit, and a second parameter included in the target indication unit is used to indicate a length of content corresponding to the first parameter; and
the target indication unit is any one of the one or more indication units.

In a specific implementation of this application, the determined content of the first system information used for signature includes the content of the first system information used for signature that is determined based on the third information;
the determined content not used for signature except for the content of the first system information used for signature does not include the content of the first system information used for signature that is determined based on the third information; and
the determined content of the first system information used for signature includes content of the first system information not used for signature that is determined based on the third information.

In a specific implementation of this application, the signature information corresponding to the first system information is included in a second system information message.

In a specific implementation of this application, that the network side device generates signature information corresponding to the first system information based on the content of the first system information used for signature includes:

The network side device signs based on second target information, to generate the signature information corresponding to the first system information, where
the second target information includes the content of the first system information used for signature and a signature key.

In a specific implementation of this application, the second target information further includes information related to a sending time of the first system information.

In a specific implementation of this application, the content not used for signature may include content whose change is not limited to a system information modification period.

In a specific implementation of this application, the content of the first system information used for signature is content whose value does not change within a system information modification period.

In a specific implementation of this application, the signature information corresponding to the first system information remains unchanged within the system information modification period, and is changeable between system information modification periods.

In a specific implementation of this application, within the system information modification period N, an input parameter used for calculating the signature information corresponding to the first system information includes time information associated with the system information modification period N and all or a part of the content of the first system information broadcast by a cell within the system information modification period N, where N is a positive integer.

In a specific implementation of this application, the time information associated with the system information modification period N includes at least one of the following:
a start moment of the system information modification period N;
an end moment of the system information modification period N;
a midpoint moment of the system information modification period N; or
a predefined moment between a start moment and an end moment of the system information modification period N.

For descriptions of the steps of the method embodiment shown in FIG. 5, refer to the descriptions of the steps of the method embodiment shown in FIG. 3, which can be compared with each other to achieve a same technical effect. To avoid repetition, details are not described herein again.

The system information transmission method provided in FIG. 5 of this embodiment of this application may be performed by a system information transmission apparatus. In this embodiment of this application, the system information transmission apparatus provided in this embodiment of this application is described by using an example in which the system information transmission apparatus executes the system information transmission method shown in FIG. 5.

As shown in FIG. 6, the system information transmission apparatus 600 may include the following modules:
a second determining module 610, configured to determine content of the first system information used for signature, where the content of the first system information used for signature includes all or a part of content of the first system information, and the first system information includes one or more system information blocks;
a generation module 620, configured to generate signature information corresponding to the first system information based on the content of the first system information used for signature; and
a broadcasting module 630, configured to broadcast the first system information and the signature information corresponding to the first system information.

According to the apparatus provided in this embodiment of this application, system information corresponds to signature information. Content used for signature includes all or a part of content of the system information. The system information and the signature information corresponding to the system information is broadcast, so that after receiving the system information, a terminal may verify the system information based on the signature information corresponding to the system information. This can improve security of the system information, effectively avoid operating based on system information sent by an illegal base station, and avoid causing losses to users.

In a specific implementation of this application, the second determining module 610 is configured to:
determine, based on third information, the content of the first system information used for signature.

In a specific implementation of this application, the third information includes content of each system information block not used or used for signature, or the third information includes a feature of content not used or used for signature.

In a specific implementation of this application, the third information is specified in a protocol or preconfigured in the network side device.

In a specific implementation of this application, the system information transmission apparatus 600 further includes a bearer module, configured to:
carry indication information in the first system information or in another system information message except for the first system information.

In a specific implementation of this application, the indication information includes one or more indication units, and each indication unit is used to indicate the content of the first system information not used or used for signature.

In a specific implementation of this application, each indication unit includes a first parameter and a second parameter, where
a first parameter included in a target indication unit is used to indicate a start position of the content of the first system information not used or used for signature that is indicated by the target indication unit, and a second parameter included in the target indication unit is used to indicate a length of content corresponding to the first parameter; and
the target indication unit is any one of the one or more indication units.

In a specific implementation of this application, the determined content of the first system information used for signature includes the content of the first system information used for signature that is determined based on the third information;
the determined content not used for signature except for the content of the first system information used for signature does not include the content of the first system information used for signature that is determined based on the third information; and
the determined content of the first system information used for signature includes content of the first system information not used for signature that is determined based on the third information.

In a specific implementation of this application, the signature information corresponding to the first system information is included in a second system information message.

In a specific implementation of this application, the generation module 620 is configured to:
sign based on second target information, to generate the signature information corresponding to the first system information, where
the second target information includes the content of the first system information used for signature and a signature key.

In a specific implementation of this application, the second target information further includes information related to a sending time of the first system information.

In a specific implementation of this application, the content not used for signature may include content whose change is not limited to a system information modification period.

In a specific implementation of this application, the content of the first system information used for signature is content whose value does not change within a system information modification period.

In a specific implementation of this application, the signature information corresponding to the first system information remains unchanged within the system information modification period, and is changeable between system information modification periods.

In a specific implementation of this application, within the system information modification period N, an input parameter used for calculating the signature information corresponding to the first system information includes time information associated with the system information modification period N and all or a part of the content of the first system information broadcast by a cell within the system information modification period N, where N is a positive integer.

In a specific implementation of this application, the time information associated with the system information modification period N includes at least one of the following:
a start moment of the system information modification period N;
an end moment of the system information modification period N;
a midpoint moment of the system information modification period N; or
a predefined moment between a start moment and an end moment of the system information modification period N.

The system information transmission apparatus 600 provided in this embodiment of this application can implement the processes implemented in the method embodiment shown in FIG. 5, and achieve a same technical effect. To avoid repetition, details are not described herein again.

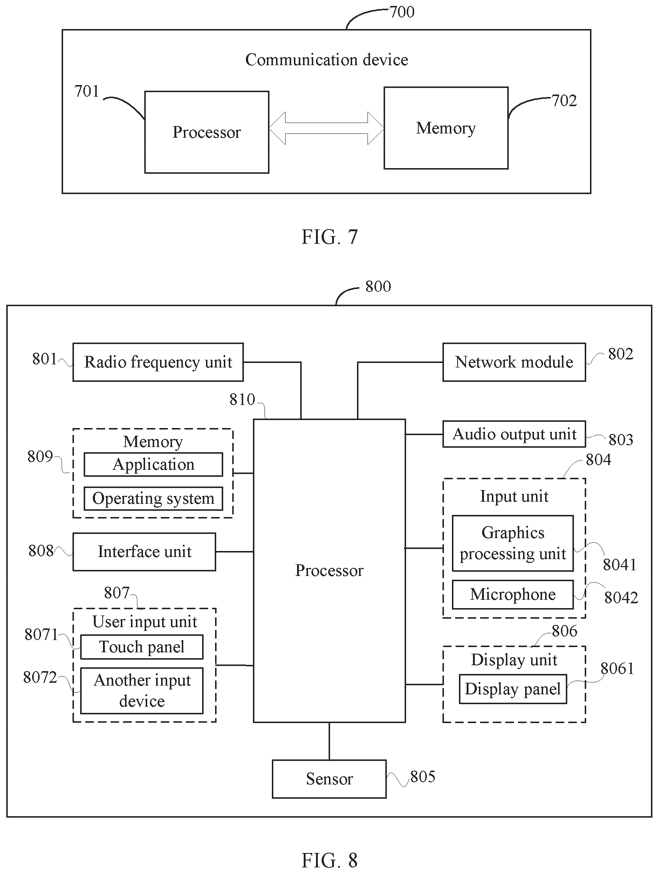

As shown in FIG. 7, an embodiment of this application further provides a communication device 700, including a processor 701 and a memory 702, and the memory 702 stores a program or an instruction that can be run on the processor 701. For example, in a case that the communication device 700 is a terminal, when the program or the instruction is executed by the processor 701, the steps of the method embodiment shown in FIG. 3 are implemented, and a same technical effect can be achieved. In a case that the communication device 700 is a network side device, when the program or the instruction is executed by the processor 701, the steps of the method embodiment shown in FIG. 6 are implemented, and a same technical effect can be achieved. To avoid repetition, details are not described herein again.

An embodiment of this application further provides a terminal. As shown in FIG. 8, the terminal 800 includes but is not limited to at least some components of a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the terminal 800 may further include a power supply (such as a battery) that supplies power to each component. The power supply may be logically connected to the processor 810 by using a power supply management system, to implement functions such as charging and discharging management, and power consumption management by using the power supply management system. The terminal structure shown in FIG. 8 constitutes no limitation on the terminal 800, and the terminal 800 may include more or fewer components than those shown in the figure, or combine some components, or have different component arrangements. Details are not described herein.

It should be understood that in this embodiment of this application, the input unit 804 may include a graphics processing unit (Graphics Processing Unit, GPU) 8041 and a microphone 8042. The graphics processing unit 8041 processes image data of a static picture or a video obtained by an image capture apparatus (for example, a camera) in a video capture mode or an image capture mode. The display unit 806 may include a display panel 8061, and the display panel 8061 may be configured in a form of a liquid crystal display, an organic light-emitting diode, or the like. The user input unit 807 includes at least one of a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 801 may transmit the downlink data to the processor 810 for processing. In addition, the radio frequency unit 801 may send uplink data to the network side device. Generally, the radio frequency unit 801 includes but is not limited to an antenna, an amplifier, a transceiver, a coupler, a low noise amplifier, a duplexer, and the like.

The memory 809 may be configured to store a software program or an instruction and various data. The memory 809 may mainly include a first storage area for storing a program or an instruction and a second storage area for storing data. The first storage area may store an operating system, and an application or an instruction required by at least one function (for example, a sound playing function or an image playing function). In addition, the memory 809 may be a volatile memory or a non-volatile memory, or the memory 809 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 809 in this embodiment of this application includes but is not limited to these memories and any memory of another proper type.

The processor 810 may include one or more processing units. Optionally, an application processor and a modem processor are integrated into the processor 810. The application processor mainly processes an operating system, a user interface, an application, or the like. The modem processor mainly processes a wireless communication signal, for example, a baseband processor. It may be understood that, alternatively, the modem processor may not be integrated into the processor 810.

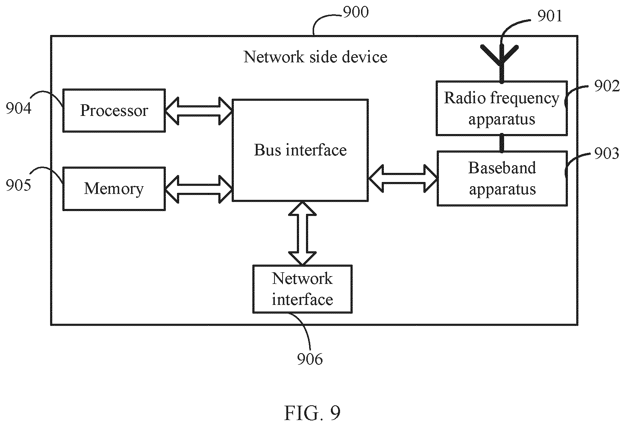

An embodiment of this application further provides a network side device. As shown in FIG. 9, the network side device 900 includes an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information through the antenna 901, and sends the received information to the baseband apparatus 903 for processing. In a downlink direction, the baseband apparatus 903 processes information that needs to be sent, and sends processed information to the radio frequency apparatus 902. The radio frequency apparatus 902 processes the received information, and sends processed information through the antenna 901.

In the foregoing embodiment, the method performed by the network side device may be implemented in the baseband apparatus 903. The baseband apparatus 903 includes a baseband processor.

For example, the baseband apparatus 903 may include at least one baseband board. A plurality of chips are disposed on the baseband board. As shown in FIG. 90, one chip is, for example, a baseband processor, and is connected to the memory 905 by using a bus interface, to invoke a program in the memory 905 to perform the operations of the network side device shown in the foregoing method embodiment.

The network side device may further include a network interface 906, and the interface is, for example, a common public radio interface (common public radio interface, CPRI).

Specifically, the network side device 9000 in this embodiment of the present invention further includes an instruction or a program that is stored in the memory 905 and that can be run on the processor 904. The processor 904 invokes the instruction or the program in the memory 905 to perform the method performed by the modules shown in FIG. 6, and a same technical effect is achieved. To avoid repetition, details are not described herein again.

An embodiment of this application further provides a readable storage medium, where the readable storage medium stores a program or an instruction, and when the program or the instruction is executed by a processor, the processes of the method embodiment shown in FIG. 3 or the processes of the method embodiment shown in FIG. 5 are implemented, and a same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc.

An embodiment of this application further provides a computer program/program product. The computer program/program product is stored in a storage medium, and the computer program/program product is executed by at least one processor to implement the processes of the method embodiment shown in FIG. 3 or the processes of the method embodiment shown in FIG. 5, and a same technical effect can be achieved. To avoid repetition, details are not described herein again.

An embodiment of this application further provides a communication system, including a terminal and a network side device. The terminal may be configured to perform the steps of the method embodiment shown in FIG. 3, and the network side device may be configured to perform the steps of the method embodiment shown in FIG. 5.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in the implementations of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A system information transmission method, comprising:
receiving, by a terminal, first system information, wherein the first system information comprises one or more system information blocks;
obtaining, by the terminal, signature information corresponding to the first system information;
performing, by the terminal, signature verification on the first system information based on the signature information corresponding to the first system information, wherein
content of the first system information used for signature comprises all or a part of content of the first system information.

2. The method according to claim 1, wherein the performing, by the terminal, signature verification on the first system information based on the signature information corresponding to the first system information comprises:
determining, by the terminal, the content of the first system information used for signature; and
performing, by the terminal, signature verification on the first system information based on the signature information corresponding to the first system information and the content of the first system information used for signature.

3. The method according to claim 2, wherein the determining, by the terminal, the content of the first system information used for signature comprises:
determining, by the terminal based on first information, the content of the first system information used for signature, wherein
the first information comprises content of each system information block not used or used for signature, or the first information comprises a feature of content not used or used for signature.

4. The method according to claim 3, wherein the first information is specified in a protocol or preconfigured in the terminal.

5. The method according to claim 2, wherein the determining, by the terminal, the content of the first system information used for signature comprises:
determining, by the terminal, the content of the first system information used for signature based on indication information, wherein
the indication information is used to indicate content of the first system information not used or used for signature.

6. The method according to claim 5, wherein the indication information is comprised in the first system information or is comprised in another system information message except for the first system information.

7. The method according to claim 5, wherein the indication information comprises one or more indication units, and each indication unit is used to indicate a part of the content of the first system information not used or used for signature.

8. The method according to claim 7, wherein each indication unit comprises a first parameter and a second parameter, wherein
a first parameter comprised in a target indication unit is used to indicate a start position of the content of the first system information not used or used for signature that is indicated by the target indication unit, and a second parameter comprised in the target indication unit is used to indicate a length of content corresponding to the first parameter; and
the target indication unit is any one of the one or more indication units.

9. The method according to claim 7, wherein the indication information further comprises a third parameter, and the third parameter is used to indicate a quantity of the indication units comprised in the indication information.

10. The method according to claim 5, further comprising:
determining, by the terminal, whether the indication information complies with a rule corresponding to second information;
determining, by the terminal in a case that a first condition is met, that a verification performed on the first system information succeeds, wherein
the first condition comprises:
the indication information complies with the rule corresponding to the second information; and
the signature verification performed on the first system information succeeds based on the signature information corresponding to the first system information and the content of the first system information used for signature.

11. The method according to claim 10, further comprising:
determining, by the terminal in a case that a second condition is met, that the verification performed on the first system information fails, wherein
the second condition comprises at least one of the following:
the indication information does not comply with the rule corresponding to the second information; and
the signature verification performed on the first system information fails based on the signature information corresponding to the first system information and the content of the first system information used for signature.

12. The method according to claim 10, wherein the determining, by the terminal, whether the indication information complies with a rule corresponding to second information comprises:
determining, by the terminal, in a case that at least one piece of the following information is determined, that the indication information does not comply with the rule corresponding to the second information;
the content used for signature indicated by the indication information does not comprise at least one of the content of the first system information used for signature that is determined based on the second information; or
the content not used for signature indicated by the indication information comprises at least one of the content of the first system information used for signature that is determined based on the second information.

13. The method according to claim 1, wherein the signature information corresponding to the first system information is comprised in a second system information message.

14. The method according to claim 1, wherein the performing, by the terminal, signature verification on the first system information based on the signature information corresponding to the first system information comprises:
performing, by the terminal, the signature verification on the first system information based on first target information, wherein
the first target information comprises at least the first system information, the signature information corresponding to the first system information, and a signature verification key.

15. The method according to claim 14, wherein the first target information further comprises information related to a receiving time of the first system information.

16. The method according to any one of claims 1 to 15, wherein the content of the first system information used for signature is content whose value does not change within a system information modification period.

17. The method according to claim 16, wherein the signature information corresponding to the first system information is unchanged within the system information modification period, and is changeable between system information modification periods.

18. The method according to claim 16, wherein within the system information modification period N, an input parameter used for calculating the signature information corresponding to the first system information comprises time information associated with the system information modification period N and all or a part of the content of the first system information broadcast by a cell within the system information modification period N, wherein N is a positive integer.

19. The method according to claim 18, wherein the time information associated with the system information modification period N comprises at least one of the following:
a start moment of the system information modification period N;
an end moment of the system information modification period N;
a midpoint moment of the system information modification period N; or
a predefined moment between a start moment and an end moment of the system information modification period N.

20. The method according to claim 3 or 7, wherein the content not used for signature comprises content whose change is not limited to a system information modification period.

21. A system information transmission apparatus, comprising:
a receiving module, configured to receive first system information, wherein the first system information comprises one or more system information blocks;
an obtaining module, configured to obtain signature information corresponding to the first system information; and
a verification module, configured to perform signature verification on the first system information based on the signature information corresponding to the first system information, wherein
content of the first system information used for signature comprises all or a part of content of the first system information.

22. A system information transmission method, comprising:
determining, by a network side device, content of first system information used for signature, wherein the content of the first system information used for signature comprises all or a part of content of the first system information, and the first system information comprises one or more system information blocks;
generating, by the network side device, signature information corresponding to the first system information based on the content of the first system information used for signature; and
broadcasting, by the network side device, the first system information and the signature information corresponding to the first system information.

23. The method according to claim 22, wherein the determining, by a network side device, content of first system information used for signature comprises:
determining, by the network side device based on third information, the content of the first system information used for signature, wherein
the third information comprises content of each system information block not used or used for signature, or the third information comprises a feature of content not used or used for signature.

24. The method according to claim 23, wherein the third information is specified in a protocol or preconfigured in the network side device.

25. The method according to claim 22, further comprising:
carrying, by the network side device, indication information in the first system information or in another system information message except for the first system information.

26. The method according to claim 25, wherein the indication information comprises one or more indication units, and each indication unit is used to indicate the content of the first system information not used or used for signature.

27. The method according to claim 26, wherein each indication unit comprises a first parameter and a second parameter, wherein
a first parameter comprised in a target indication unit is used to indicate a start position of the content of the first system information not used or used for signature that is indicated by the target indication unit, and a second parameter comprised in the target indication unit is used to indicate a length of content corresponding to the first parameter; and
the target indication unit is any one of the one or more indication units.

28. The method according to claim 23, wherein the determined content of the first system information used for signature comprises the content of the first system information used for signature that is determined based on the third information;
the determined content not used for signature except for the content of the first system information used for signature does not comprise the content of the first system information used for signature that is determined based on the third information; and
the determined content of the first system information used for signature comprises content of the first system information not used for signature that is determined based on the third information.

29. The method according to claim 22, wherein the signature information corresponding to the first system information is comprised in a second system information message.

30. The method according to claim 22, wherein the generating, by the network side device, signature information corresponding to the first system information based on the content of the first system information used for signature comprises:
signing, by the network side device, based on second target information, to generate the signature information corresponding to the first system information, wherein
the second target information comprises the content of the first system information used for signature and a signature key.

31. The method according to claim 30, wherein the second target information further comprises information related to a sending time of the first system information.

32. The method according to claim 23, wherein the content not used for signature comprises content whose change is not limited to a system information modification period.

33. The method according to any one of claims 22 to 32, wherein the content of the first system information used for signature is content whose value does not change within a system information modification period.

34. The method according to claim 33, wherein the signature information corresponding to the first system information is unchanged within the system information modification period, and is changeable between system information modification periods.

35. The method according to claim 33, wherein within the system information modification period N, an input parameter used for calculating the signature information corresponding to the first system information comprises time information associated with the system information modification period N and all or a part of the content of the first system information broadcast by a cell within the system information modification period N, wherein N is a positive integer.

36. The method according to claim 35, wherein the time information associated with the system information modification period N comprises at least one of the following:
a start moment of the system information modification period N;
an end moment of the system information modification period N;
a midpoint moment of the system information modification period N; or
a predefined moment between a start moment and an end moment of the system information modification period N.

37. A system information transmission apparatus, comprising:
a second determining module, configured to determine content of the first system information used for signature, wherein the content of the first system information used for signature comprises all or a part of content of the first system information, and the first system information comprises one or more system information blocks;
a generation module, configured to generate signature information corresponding to the first system information based on the content of the first system information used for signature; and
a broadcasting module, configured to broadcast the first system information and the signature information corresponding to the first system information.

38. A terminal, comprising a processor and a memory, wherein the memory stores a program or an instruction that can be run on the processor, and when the program or the instruction is executed by the processor, the steps of the system information transmission method according to any one of claims 1 to 20 are implemented.

39. A network side device, comprising a processor and a memory, wherein the memory stores a program or an instruction that can be run on the processor, and when the program or the instruction is executed by the processor, the steps of the system information transmission method according to any one of claims 22 to 36 are implemented.

40. A readable storage medium, wherein the readable storage medium stores a program or an instruction, and when the program or the instruction is executed by a processor, the system information transmission method according to any one of claims 1 to 20 is implemented, or the steps of the system information transmission method according to any one of claims 22 to 36 are implemented.

41. A chip, wherein the chip comprises a processor and a communication interface, the communication interface is coupled to the processor, and the processor is configured to run a program or an instruction, to implement the system information transmission method according to any one of claims 1 to 20, or the steps of the system information transmission method according to any one of claims 22 to 36.

42. A computer program product, wherein the program product is stored in a non-volatile storage medium, and the program product is executed by at least one processor, to implement the system information transmission method according to any one of claims 1 to 20, or to implement the system information transmission method according to any one of claims 22 to 36.

43. An electronic device, wherein the device is configured to perform the system information transmission method according to any one of claims 1 to 20, or implement the system information transmission method according to any one of claims 22 to 36.
